# EUROPÄISCHE PATENTSCHRIFT

(11) **EP 4 291 434 B1**
(45) Veröffentlichungstag und Bekanntmachung des Hinweises auf die Patenterteilung: **10.12.2025**
(21) Anmeldenummer: 22700826.5
(22) Anmeldetag: 18.01.2022
(51) Int. Cl.: B60K 35/10, B60K 35/21, B60K 35/28, B60K 35/65, B60R 16/037

(54) **VERFAHREN ZUM BETREIBEN EINES KRAFTFAHRZEUGS SOWIE KRAFTFAHRZEUG**
METHOD FOR OPERATING A MOTOR VEHICLE, AND MOTOR VEHICLE
PROCÉDÉ DE FONCTIONNEMENT D'UN VÉHICULE À MOTEUR, ET VÉHICULE À MOTEUR

(30) Priorität: 09.02.2021 DE 102021201216
(43) Veröffentlichungstag der Anmeldung: 20.12.2023
(73) Patentinhaber: VOLKSWAGEN AKTIENGESELLSCHAFT, 38440 Wolfsburg (DE)
(72) Erfinder: THIELE, Henning, 38440 Wolfsburg (DE); HUWER, Wojciech, 38110 Braunschweig (DE); GRÜNEBERG, Anette, 30657 Hannover (DE); TRIKALIOTIS, Spiro, 39646 Oebisfelde-Weferlingen (DE); HELWICH, Olga, 38542 Leiferde (DE); BARTHEL, Maximilian, 04416 Markkleeberg (DE); YAVUZ, Sema, 38106 Braunschweig (DE); SHIN, Hyein, 14057 Berlin (DE); ALBRECHT, Stephanie, 38440 Wolfsburg (DE); WAGNER, Volkmar, 10965 Berlin (DE)
(86) Internationale Anmeldenummer: PCT/EP2022/050996
(87) Internationale Veröffentlichungsnummer: WO 2022/171397

(56) Entgegenhaltungen:
- DE-A1- 102013 005 085
- DE-A1- 102018 207 849
- US-A1- 2020 239 011
- US-B2- 10 424 296

## Beschreibung

Die Erfindung betrifft ein Verfahren zum Betreiben eines Kraftfahrzeugs sowie ein Kraftfahrzeug.

Aus der DE 10 2018 113 140 A1 ist bereits ein Verfahren zur Kommunikation zwischen einem Fahrzeugnutzer und einem Fahrzeug bekannt. Bei dem Verfahren werden Eingabedaten des Fahrzeugnutzers erfasst und die Eingabedaten an eine Verarbeitungseinheit übertragen. Die Eingabedaten werden basierend auf einem für das Fahrzeug und den Fahrzeugnutzer spezifischen Kommunikationsprofil verarbeitet und an das Fahrzeug übertragen. Das Kommunikationsprofil umfasst mindestens ein Fahrzeugnutzerprofil und ein Fahrzeugprofil. Das Fahrzeugnutzerprofil beinhaltet vorzugsweise alle für einen Fahrzeugnutzer spezifischen Eigenschaften, beispielsweise bevorzugte Routenkriterien, bevorzugte Klimatisierung-, Sitz-, Infotainment- und Kommunikationseinstellungen, sowie weitere Präferenzen. Bei dem Verfahren ist es weiterhin vorgesehen, dass eine oder mehrere Komponenten des Fahrzeugs basierend auf den Ausgabedaten gesteuert werden. Die eine oder mehreren Komponenten des Fahrzeugs können Mittel zur Sitzverstellung und/oder Mittel zur Bereitstellung einer Massage und/oder Mittel zur Klimatisierung des Fahrzeugs und/oder Mittel zur Innenbeleuchtung und/oder Mittel zur Einstellung von Duftoptionen und/oder Mittel zur Aufnahme und/oder Wiedergabe von Audio umfassen.

Weiterhin ist aus der DE 10 2018 212 298 A1 ein Verfahren zur individuellen Konfiguration eines Fahrverhaltens eines Kraftfahrzeugs bekannt. Bei dem Verfahren wird eine Mehrzahl von Fahrmodi bereitgestellt, welche jeweils eine Konfiguration von Fahrzeugparametern derart spezifizieren, dass je Fahrmodus mehrere Fahrzeugparameter mit jeweils einem Fahrzeugparameterwert belegt werden. Die Fahrzeugparameter beeinflussen mitsamt den Fahrzeugparameterwerten ein Fahrverhalten des Kraftfahrzeugs. Hierbei sind jegliche Parameter, welche sich auf eine Fahrzeugspezifikation beziehen, konfigurierbar und können somit individualisiert angewendet werden. Bei den Fahrzeugparametern kann es sich nicht nur um Fahrparameter handeln, sondern es können auch Komfortfunktionen hinterlegt sein. So kann ein Fahrmodus eine bestimmte Einstellung der Klimaanlage spezifizieren.

Die DE 10 2013 005 085 A1 offenbart ein Verfahren zum Einstellen von Ambientesystemen eines Kraftfahrzeugs, wobei von einer jeweiligen Nutzungssituation abhängige Einstellungen der Ambientesysteme erfasst und gespeichert werden. Allein mittels eines Betätigens einer Umschalteinheit, etwa durch Betätigen eines Schalters können die nutzungssituationsabhängigen Einstellungen der Ambientesysteme hergestellt werden. Ferner sind mehrere verschiedene Nutzungssituationen definiert, in denen die Ambientesysteme unterschiedlich eingestellt sind.

Ferner zeigt die DE 10 2018 207 849 A1 ein System zur Steuerung von Ausgabeeinheiten in einem Fahrzeug, wobei ein Nutzer ein Steuerungsprofil erstellen kann, in welchem bevorzugte Einstellungen für das Fahrzeug-Ambiente festgelegt sind. Die Ausgabeeinheit kann zum Beispiel ein Beduftungssystem zum Ausgeben von Düften in den Fahrzeuginnenraum umfassen.

Aufgabe der vorliegenden Erfindung ist es, eine Lösung zu schaffen, welche ein besonders einfaches und gezieltes Einstellen von Komfortfunktionen eines Kraftfahrzeugs ermöglicht.

Diese Aufgabe wird erfindungsgemäß durch die Gegenstände der unabhängigen Patentansprüche gelöst. Weitere mögliche Ausgestaltungen der Erfindung sind in den Unteransprüchen, der Beschreibung und den Figuren offenbart.

Die Erfindung betrifft ein Verfahren zum Betreiben eines Kraftfahrzeugs, bei welchem mittels einer Bedienvorrichtung eine Benutzereingabe empfangen wird, welche eine Auswahl eines einzustellenden Ambientemodus aus mehreren vorgegebenen Ambientemodi charakterisiert. Bei dem Verfahren ist es weiterhin vorgesehen, dass mittels einer Steuereinrichtung ein Einstellen eines durch den ausgewählten Ambientemodus repräsentierten Satz an Einstellungen in durch den ausgewählten Ambientemodus vorgegebenen, einzustellenden, jeweils eine Komfortfunktion bereitstellenden Fahrzeugkomponenten des Kraftfahrzeugs ausgelöst wird. Das bedeutet, dass das Kraftfahrzeug die Bedienvorrichtung, die Steuereinrichtung sowie die mehreren Fahrzeugkomponenten umfasst, mittels welchen das Verfahren ausführbar ist. Über die jeweiligen vorgegebenen Ambientemodi können jeweilige Makrobefehle vorgegeben werden, wobei jeder Makrobefehl den zugeordneten Satz an vorgegebenen Einstellungen für die jeweiligen Fahrzeugkomponenten des Kraftfahrzeugs repräsentiert. Es ist somit vorgesehen, dass für jede durch den ausgewählten Ambientemodus definierte Komfortfunktion eine durch den ausgewählten Ambientemodus vorgegebene Einstellung vorgesehen ist. Das Verfahren ermöglicht somit das gezielte gemeinsame Einstellen mehrerer Komfortfunktionen über das Auswählen des Ambientemodus aus den mehreren vorgegebenen Ambientemodi. Hierdurch können von einer Person besonders viele unterschiedliche, jeweils eine Komfortfunktion bereitstellende Fahrzeugkomponenten besonders einfach und dabei insbesondere über besonders wenige Benutzereingaben eingestellt und angepasst werden. Das beschriebene Verfahren ermöglicht das gemeinsame Anpassen der Einstellungen von durch die jeweiligen Ambientemodi repräsentierten Fahrzeugkomponenten durch Auswahl eines der Ambientemodi.

Im Gegensatz hierzu ist es bei der DE 10 2018 113 140 A1 vorgesehen, dass aus den Eingabedaten, welche natürlichsprachliche Anweisungen enthalten können, in Abhängigkeit von dem Fahrzeugnutzerprofil die Ausgabedaten ermittelt werden, in Abhängigkeit von welchen einzelne Komfortfunktionen gesteuert werden können. Es ist hierbei nicht vorgesehen, dass jeweilige einen Satz von Einstellungen für Fahrzeugkomponenten vorgebende Ambientemodi vorgegeben sind. Weiterhin sind aus der DE 10 2018 212 298 A1 vorgegebene Fahrmodi bekannt, in Abhängigkeit von welchen eine Klimaanlage gedrosselt werden kann. Hieraus geht somit ein Verfahren hervor, bei welchem ein Fahrmodus ausgewählt wird und in Abhängigkeit von dem eingestellten Fahrmodus eine Klimaanlage angepasst wird. Ein von einem Fahrmodus unabhängiges gemeinsames Einstellen mehrerer jeweilige Komfortfunktionen bereitstellender Fahrzeugkomponenten, wodurch von der Person die Komfortfunktionen besonders einfach gleichzeitig einstellbar sind, geht zumindest aus dem zitierten Stand der Technik nicht hervor.

Zudem wird mittels der Steuereinrichtung in Abhängigkeit vom ausgewählten Ambientemodus ein Fahrmodus aus mehreren vorgegebenen Fahrmodi ausgewählt und eingestellt, welcher einen Satz an Einstellungen für jeweilige eine Fahrfunktion bereitstellende Fahrzeugkomponenten vorgibt. Das bedeutet, dass der in dem Kraftfahrzeug eingestellte Fahrmodus dem ausgewählten Ambientemodus nachfolgt. Hierbei kann in der Steuereinrichtung eine Zuordnungsvorschrift hinterlegt sein, welche vorgibt, welcher vorgegebene Fahrmodus bei dem jeweiligen ausgewählten Ambientemodus einzustellen ist. Eine Person kann somit über die Bedienvorrichtung den Ambientemodus auswählen, wobei das durch die die Fahrfunktion bereitstellende Fahrzeugkomponenten vorgegebene Fahrverhalten an den ausgewählten Ambientemodus angepasst wird. Hierdurch können die durch den ausgewählten Ambientemodus vorgegebenen Komfortfunktionen mit dem durch den Fahrmodus vorgegebenen Fahrverhalten des Kraftfahrzeugs in Einklang gebracht werden, wobei das Fahrverhalten über den ausgewählten Ambientemodus vorgegeben wird. In weiterer Ausgestaltung der Erfindung ist es vorgesehen, dass mittels der Steuereinrichtung der ausgewählte Ambientemodus unabhängig von einem bereits eingestellten Fahrmodus eingestellt wird. Das bedeutet, dass der bereits in dem Kraftfahrzeug eingestellte Fahrmodus keinen Einfluss auf die in Abhängigkeit von dem gewählten Ambientemodus vorgesehenen, in den Fahrzeugkomponenten einzustellenden Einstellungen hat. Die Komfortfunktionen können somit von einer Person über den ausgewählten Ambientemodus separat vom Fahrmodus angesteuert werden. Hierdurch können ein in Abhängigkeit von dem ausgewählten Fahrmodus eingestelltes Fahrverhalten sowie die jeweiligen in Abhängigkeit von dem ausgewählten Ambientemodus eingestellten Komfortfunktionen besonders gut an Wünsche der Person, insbesondere von Fahrzeuginsassen des Kraftfahrzeugs, angepasst werden.

In weiterer Ausgestaltung der Erfindung ist es vorgesehen, dass die Benutzereingabe mittels einer als Drehsteller ausgebildeten Bedienvorrichtung empfangen wird. Diese Bedienvorrichtung umfasst eine Bildschirmeinrichtung, ein die Bildschirmeinrichtung ringförmig umschließendes Ringelement sowie ein Basiselement, relativ zu welchem das Ringelement um die Drehachse drehbar ist. Durch Verdrehen des Ringelements zwischen jeweiligen für das Ringelement vorgegebenen Drehstellungen um die Drehachse kann die Bedienvorrichtung die Benutzereingabe empfangen, welche das Auswählen des Ambientemodus aus den mehreren vorgegebenen Ambientemodi charakterisiert. Alternativ oder zusätzlich kann die Bildschirmeinrichtung eine berührempfindliche Oberfläche aufweisen, über welche bei einer Berührung der berührempfindlichen Oberfläche durch die Person die Benutzereingabe festgestellt werden kann. Die Bedienvorrichtung umfasst somit besonders wenige Elemente und ermöglicht darüber hinaus, dass über die Benutzereingabe, in Abhängigkeit von welcher der Ambientemodus aus den mehreren vorgegebenen Ambientemodi ausgewählt wird, die mehreren Einstellungen für die durch den ausgewählten Ambientemodus vorgegebenen Fahrzeugkomponenten vorgegeben werden. Hierdurch wird ein besonders einfaches und aufgrund des Drehstellers intuitives Einstellen der Komfortfunktionen ermöglicht.

In weiterer Ausgestaltung der Erfindung ist es vorgesehen, dass mittels der Steuereinrichtung ein Anzeigen des eingestellten Ambientemodus durch eine Ausgabeeinrichtung ausgelöst wird. Bei der Ausgabeeinrichtung kann es sich um die Bildschirmeinrichtung der Bedienvorrichtung oder um ein Display im Fahrzeuginnenraum des Kraftfahrzeugs handeln. Über die Ausgabeeinrichtung kann eine den eingestellten Ambientemodus charakterisierende Information optisch und/oder akustisch ausgegeben werden. Über die Ausgabeeinrichtung ist somit die Person, insbesondere wenigstens ein Fahrzeuginsasse des Kraftfahrzeugs, besonders einfach über den ausgewählten und eingestellten Ambientemodus informierbar.

In weiterer Ausgestaltung der Erfindung ist es vorgesehen, dass in Abhängigkeit von wenigstens einer weiteren Benutzereingabe wenigstens eine Einstellung wenigstens einer durch den ausgewählten Ambientemodus charakterisierten Fahrzeugkomponente angepasst wird. Über die wenigstens eine weitere Benutzereingabe kann somit die Person bei dem eingestellten Ambientemodus die wenigstens eine Einstellung der wenigstens einen Fahrzeugkomponente individualisiert anpassen und somit individualisieren. Der Person wird es somit bei dem Verfahren ermöglicht, durch das Auswählen des Ambientemodus über die erste Benutzereingabe das Einstellen des vorgegebenen Satzes an Einstellungen in den durch den ausgewählten Ambientemodus charakterisierten Fahrzeugkomponenten auszulösen und darüber hinaus über die wenigstens eine weitere, zweite Benutzereingabe wenigstens eine der Einstellungen wenigstens einer der Fahrzeugkomponenten anzupassen. Hierdurch wird eine besonders einfache Anpassung der jeweiligen Einstellungen der Fahrzeugkomponenten an Bedürfnisse der Person ermöglicht. Über den ausgewählten Ambientemodus kann somit eine grobe Voreinstellung der durch den ausgewählten Ambientemodus charakterisierten Fahrzeugkomponenten erfolgen, wobei durch die wenigstens eine zweite Benutzereingabe wenigstens eine Feineinstellung wenigstens einer der Fahrzeugkomponenten ausgelöst werden kann.

In weiterer Ausgestaltung der Erfindung ist es vorgesehen, dass für das Auswählen ein beruhigender Ambientemodus und/oder ein aktivierender Ambientemodus und/oder ein aufmunternder Ambientemodus und/oder ein fokussierender Ambientemodus als vorgegebene Ambientemodi bereitgestellt werden. Somit kann die Person über die Benutzereingabe aus dem beruhigenden Ambientemodus und/oder dem aktivierenden Ambientemodus und/oder dem aufmunternden Ambientemodus und/oder dem fokussierenden Ambientemodus einen Ambientemodus für das Einstellen in dem Kraftfahrzeug auswählen. Hierbei kann die Person den Ambientemodus insbesondere in Abhängigkeit von einer derzeitigen Stimmung der Person beziehungsweise einer gewünschten Stimmung der Person ausgewählt werden. Über diese für jeweilige mögliche Stimmungen der Person vorgesehenen Ambientemodi kann der Person ermöglicht werden, dass diese über das Auswählen des Ambientemodus besonders einfach die jeweiligen Komfortfunktionen an seine derzeitige oder an die gewünschte Stimmung anpassen kann. Hierbei können die jeweiligen durch die Ambientemodi vorgegebenen Einstellungen der Fahrzeugfunktionen dazu vorgesehen sein, die derzeitige Stimmung der Person zu unterstützen beziehungsweise die gewünschte durch den ausgewählten Ambientemodus repräsentierte Stimmung bei der Person auszulösen beziehungsweise zu fördern. Das Vorgeben der mehreren jeweilige Stimmungen repräsentierenden Ambientemodi ermöglicht ein einfaches und aufgrund des gemeinsamen Einstellens der jeweiligen den jeweiligen Ambientemodi zugeordneten Fahrzeugkomponenten besonders schnelles Einstellen der Fahrzeugfunktionen für jeweilige Stimmungen im Fahrzeuginnenraum des Kraftfahrzeugs.

In weiterer Ausgestaltung der Erfindung ist es vorgesehen, dass durch den ausgewählten Ambientemodus eine jeweilige Einstellung mehrerer Komfortfunktionen des Kraftfahrzeugs aus Ambientelichtfarbe, Ambientelichtquelle, Ambientelichtintensität, Ambientelichtrhythmus, Layout eines frei kombinierbaren Kombiinstruments oder Layout eines Head-up-Displays, Layout einer Anzeige einer Mensch-Maschine-Schnittstelle, Klangprofil, Klangbalance, Lautstärke, Audiowiedergabeliste, Systemklang, Transmissionsklang und somit ein Schaltklang, Road-Noise-Cancellations, Klimatisierung, Lüftungsrichtung, Sitzlehnenneigung, Sitzheizung, Sitzlüftung, Massageempfehlung, Audiowiedergabe eines Fahrzeugsitzes, Raumduft und Sauerstoffgehalt vorgegeben ist. Insbesondere ist es vorgesehen, dass durch den ausgewählten Ambientemodus wenigstens zwei oder mehr der genannten Komfortfunktionen in ihrer Einstellung vorgegeben sind. Weitere, nicht explizit aufgeführte Komfortfunktionen können ebenfalls in Abhängigkeit von dem ausgewählten Ambientemodus eingestellt werden. Durch das Auswählen des Ambientemodus wird es somit ermöglicht, dass besonders viele Komfortfunktionen, insbesondere die durch den ausgewählten Ambientemodus charakterisierten Komfortfunktionen, gemeinsam in ihrer jeweiligen Einstellung angepasst werden. Hierbei können die jeweiligen Komfortfunktionen des ausgewählten Ambientemodus insbesondere zumindest im Wesentlichen gleichzeitig eingestellt werden. Hierdurch kann ein gezieltes und insbesondere besonders schnelles Einstellen einer durch den jeweiligen ausgewählten Ambientemodus vorgegebenen Atmosphäre im Fahrzeuginnenraum des Kraftfahrzeugs erfolgen.

In weiterer Ausgestaltung der Erfindung ist es vorgesehen, dass durch den ausgewählten Fahrmodus eine jeweilige Einstellung mehrerer Fahrfunktionen des Kraftfahrzeugs aus adaptiver Fahrwerksregelung, Lenkverhalten, Motor, adaptive Geschwindigkeitsregelung und dynamisches Kurvenlicht vorgegeben ist. Die adaptive Fahrwerksregelung kann auch als sogenannte Dynamic Chassis Control (DCC) bezeichnet werden. Die adaptive Geschwindigkeitsregelung kann auch als Abstandsregeleinrichtung und sogenannte Adaptive Cruise Control (ACC) bezeichnet werden. Der jeweilige eingestellte Fahrmodus gibt somit ein Fahrverhalten für das Kraftfahrzeug vor. Das Bündeln der jeweiligen Fahrfunktionen in dem vorgegebenen Fahrmodus ermöglicht ein besonders einfaches Zuordnen von jeweiligen dem ausgewählten Fahrmodus zugeordneten, ein vorgegebenes Fahrverhalten auslösenden Fahrfunktionen über die Zuordnungsvorschrift zu den vorgegebenen Ambientemodi. Hierdurch kann besonders einfach und schnell in Abhängigkeit von dem jeweiligen ausgewählten Ambientemodus über das Auswählen des Fahrmodus das Fahrverhalten des Kraftfahrzeugs angepasst werden. Ein einzelnes Zuordnen der jeweiligen Fahrfunktionen zu den vorgegebenen Ambientemodi kann somit unterbleiben.

Die Erfindung betrifft des Weiteren ein Kraftfahrzeug, mit einer Bedienvorrichtung, mit einer Steuereinrichtung sowie mit mehreren von der Steuereinrichtung einstellbaren Fahrzeugkomponenten. Das Kraftfahrzeug ist dazu eingerichtet, in einem Verfahren, wie es bereits im Zusammenhang mit dem erfindungsgemäßen Verfahren beschrieben worden ist, betrieben zu werden. Die Bedienvorrichtung ist dazu eingerichtet, eine Benutzereingabe zu empfangen, welche eine Auswahl eines einzustellenden Ambientemodus aus mehreren vorgegebenen Ambientemodi charakterisiert. Die Steuereinrichtung ist dazu eingerichtet, ein Einstellen eines durch den ausgewählten Ambientemodus repräsentierten Satz an Einstellungen in durch den ausgewählten Ambientemodus vorgegebenen, einzustellenden, jeweils eine Komfortfunktion bereitstellenden Fahrzeugkomponenten des Kraftfahrzeugs auszulösen. Die Fahrzeugkomponenten sind wiederum dazu eingerichtet, von der Steuereinrichtung gesteuert zu werden, wodurch die durch den jeweiligen ausgewählten Ambientemodus vorgegebenen Einstellungen für die Fahrzeugkomponenten in den Fahrzeugkomponenten einstellbar sind. Das Kraftfahrzeug ermöglicht es einer Person, besonders einfach eine jeweilige durch Komfortfunktionen beeinflusste Atmosphäre aufgrund der vorgegebenen Ambientemodi besonders einfach auszuwählen, wobei mittels der Steuereinrichtung in Abhängigkeit von dem ausgewählten Ambientemodus die jeweiligen Fahrzeugkomponenten besonders schnell in Abhängigkeit von dem ausgewählten Ambientemodus einstellbar sind. Vorteile und vorteilhafte Weiterbildungen des erfindungsgemäßen Verfahrens sind als Vorteile und vorteilhafte Weiterbildungen des erfindungsgemäßen Kraftfahrzeugs anzusehen und umgekehrt.

Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:

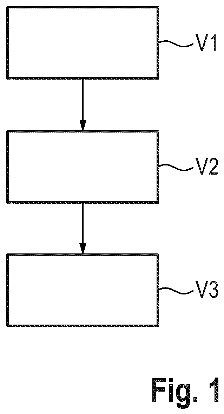

- Fig. 1: ein Verfahrensschema für ein Verfahren zum Betreiben eines Kraftfahrzeugs, bei welchem in einem ersten Schritt ein einzustellender Ambientemodus ausgewählt wird, in einem zweiten Schritt der ausgewählte Ambientemodus in dem Kraftfahrzeug eingestellt wird und in einem dritten, optionalen Schritt ein Fahrmodus in Abhängigkeit von dem ausgewählten Ambientemodus eingestellt wird; und

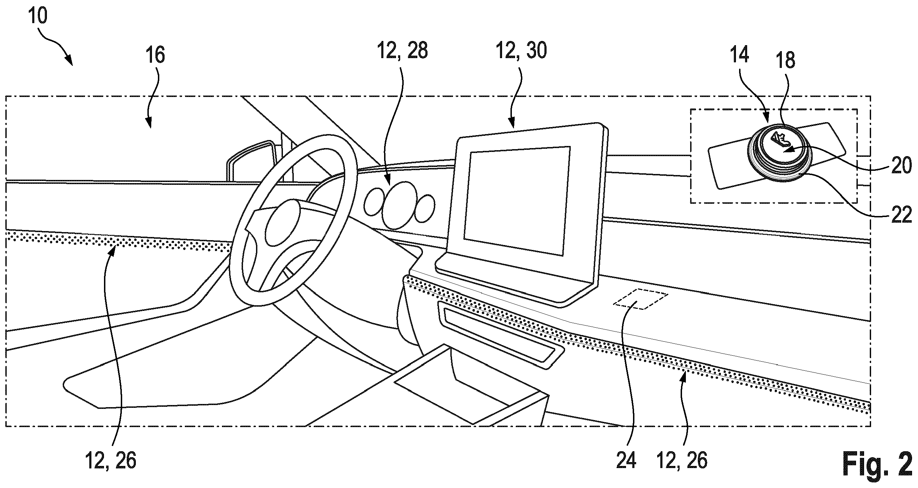

- Fig. 2: eine schematische Perspektivansicht eines Cockpits eines Kraftwagens mit einer Bedienvorrichtung, über welche der einzustellende Ambientemodus auswählbar ist, wobei in dem Cockpit der ausgewählte Ambientemodus eingestellt ist.

In Fig. 1 ist ein Verfahrensschema für ein Verfahren zum Betreiben eines Kraftfahrzeugs, vorliegend eines Kraftwagens 10, insbesondere eines Personenkraftwagens, gezeigt. Das Verfahren ermöglicht ein Einstellen mehrerer Fahrzeugkomponenten 12 des Kraftwagens 10 gemeinsam über eine Bedienvorrichtung 14. Ein Cockpit in einem Fahrzeuginnenraum 16 des Kraftwagens 10, welches in dem in Fig. 1 dargestellten Verfahren betrieben werden kann, ist in Fig. 2 gezeigt. Wie in Fig. 2 erkannt werden kann, umfasst der Kraftwagen 10 die mehreren Fahrzeugkomponenten 12, welche jeweils dazu eingerichtet sind, eine Komfortfunktion für Fahrzeuginsassen des Kraftwagens 10 bereitzustellen. Weiterhin umfasst der Kraftwagen 10 die Bedienvorrichtung 14, welche vorliegend als Drehsteller ausgebildet ist und eine von einem Ringelement 18 umfangsseitig umgebene Bildschirmeinrichtung 20, das Ringelement 18 sowie ein Basiselement 22 aufweist. Relativ zu dem Basiselement 22 ist das Ringelement 18 in unterschiedlichen Drehstellungen um eine Drehachse anordenbar. Über jeweilige Drehstellungen des Ringelements 18 um die Drehachse relativ zu dem Basiselement 22 und/oder über einen Kontakt einer Person mit einer berührempfindlichen Oberfläche der Bildschirmeinrichtung 20 kann mittels der Bedienvorrichtung 14 eine Benutzereingabe empfangen werden. Alternativ zu dem Vorsehen des Drehstellers als die Bedienvorrichtung 14, kann eine Mensch-Maschine-Schnittstelle 30 im Fahrzeuginnenraum 16 vorgesehen sein, mittels welcher die Benutzereingabe empfangen werden kann. Die Mensch-Maschine-Schnittstelle 30 kann insbesondere durch eine weitere Bildschirmeinrichtung, insbesondere mit berührempfindlicher Oberfläche, bereitgestellt werden.

Bei dem in Fig. 1 gezeigten Verfahren zum Betreiben des Kraftfahrzeugs ist es vorgesehen, dass in einem ersten Verfahrensschritt V1 mittels der Bedienvorrichtung 14 eine Benutzereingabe empfangen wird, welche eine Auswahl eines einzustellenden Ambientemodus aus mehreren vorgegebenen Ambientemodi charakterisiert. Insbesondere können die mehreren vorgegebenen Ambientemodi in einer elektronischen Recheneinrichtung des Kraftwagens 10 hinterlegt sein und für ein Auswählen zur Verfügung gestellt werden. Eine zu der in Fig. 2 gezeigten Ausgestaltung der Bedienvorrichtung 14 unterschiedliche Ausgestaltung ist ebenfalls möglich. Die mittels der Bedienvorrichtung 14 empfangene Benutzereingabe kann für die elektronische Recheneinrichtung des Kraftwagens 10 bereitgestellt werden. Mittels der elektronischen Recheneinrichtung des Kraftwagens 10 kann über eine Zuordnungsvorschrift in Abhängigkeit von der ermittelten Benutzereingabe der durch die Benutzereingabe charakterisierte auszuwählende Ambientemodus aus den mehreren vorgegebenen Ambientemodi ermittelt werden. Jeder der in der elektronischen Recheneinrichtung hinterlegten Ambientemodi kann ein Set an Einstellungen für jeweilige dem jeweiligen vorgegebenen Ambientemodus zugeordnete, eine jeweilige Komfortfunktion bereitstellende Fahrzeugkomponenten 12 des Kraftwagens 10 vorgegeben.

Der in Abhängigkeit von der empfangenen Benutzereingabe ermittelte ausgewählte Ambientemodus kann von der elektronischen Recheneinrichtung für eine schematisch mit einem Kästchen gekennzeichnete Steuereinrichtung 24 des Kraftwagens 10 bereitgestellt werden. Mittels der Steuereinrichtung 24 wird ein Einstellen des durch den ausgewählten Ambientemodus repräsentierten Satz an Einstellungen in den jeweiligen durch den ausgewählten Ambientemodus vorgegebenen, jeweils eine Komfortfunktion bereitstellenden Fahrzeugkomponenten 12 ausgelöst. Über das Auswählen des Ambientemodus aus den mehreren vorgegebenen Ambientemodi können somit sämtliche Einstellungen des durch den ausgewählten Ambientemodus repräsentierten Satz an Einstellungen für die durch den ausgewählten Ambientemodus vorgegebenen, jeweils eine Komfortfunktion bereitstellenden Fahrzeugkomponenten 12 vorgegeben und das Einstellen dieses Satzes an Einstellungen somit durch die Benutzereingabe ausgelöst werden. Das Verfahren ermöglicht somit, dass durch die Benutzereingabe besonders viele Fahrzeugkomponenten 12, insbesondere die jeweils wenigstens eine Komfortfunktion bereitstellenden, dem ausgewählten Ambientemodus zugeordneten Fahrzeugkomponenten 12 in Abhängigkeit von dem ausgewählten Ambientemodus besonders einfach eingestellt werden können.

Bei dem Verfahren ist es vorgesehen, dass die durch den ausgewählten Ambientemodus charakterisierten Komfortfunktionen der dem ausgewählten Ambientemodus zugeordneten Fahrzeugkomponenten 12 lediglich in Abhängigkeit von dem ausgewählten Ambientemodus und damit zumindest im Wesentlichen unabhängig von einem in dem Kraftwagen 10 bereits eingestellten Fahrmodus eingestellt werden. In einem optionalen dritten Verfahrensschritt V3 kann mittels der Steuereinrichtung 24 in Abhängigkeit von dem ausgewählten Ambientemodus ein Fahrmodus aus mehreren vorgegebenen Fahrmodi ausgewählt und eingestellt werden. Die Fahrmodi geben jeweils einen Satz an Einstellungen für jeweilige eine Fahrfunktion bereitstellende Fahrzeugkomponenten vor. Hierbei kann durch den jeweiligen ausgewählten Fahrmodus eine jeweilige Einstellung mehrerer Fahrfunktionen des Kraftwagens 10 aus adaptiver Fahrwerksregelung, Lenkverhalten, Motor, adaptive Geschwindigkeitsregelung und dynamischem Kurvenlicht vorgegeben werden.

Alternativ oder zusätzlich kann es in dem dritten, optionalen Verfahrensschritt V3 vorgesehen sein, dass mittels der Steuereinrichtung 24 in Abhängigkeit von einer weiteren mittels der Bedienvorrichtung 14 empfangenen Benutzereingabe wenigstens eine Einstellung wenigstens einer der durch den ausgewählten Ambientemodus charakterisierten Fahrzeugkomponente 12 individuell eingestellt wird. Somit kann es vorgesehen sein, dass in Abhängigkeit von der wenigstens einen weiteren Benutzereingabe die wenigstens eine Einstellung derr wenigstens einen durch den ausgewählten Ambientemodus charakterisierten Fahrzeugkomponente 12 angepasst wird. Die jeweiligen durch die Fahrzeugkomponenten 12 bereitgestellten Komfortfunktionen können somit mittels der wenigstens einen weiteren Benutzereingabe einzeln angepasst und somit individualisiert werden.

Um für Fahrzeuginsassen ein besonders einfaches Erkennen des ausgewählten und eingestellten Ambientemodus zu ermöglichen, kann es vorgesehen sein, dass mittels der Steuereinrichtung 24 ein Anzeigen des eingestellten Ambientemodus durch eine Ausgabeeinrichtung ausgelöst wird. Hierbei kann es sich bei der Ausgabeeinrichtung um die Bildschirmeinrichtung 20 der Bedienvorrichtung 14 handeln. Alternativ oder zusätzlich kann der eingestellte oder ausgewählte Ambientemodus mittels eines im Fahrzeuginnenraum 16 des Kraftwagens 10 angeordneten Displays als Ausgabeeinrichtung angezeigt werden.

Wie in Fig. 2 erkannt werden kann, kann es sich bei den Fahrzeugkomponenten 12 insbesondere um eine Beleuchtungseinrichtung 26, um ein Kombiinstrument 28 oder um eine Mensch-Maschine-Schnittstelle 30 handeln. Als Komfortfunktion kann mittels der Beleuchtungseinrichtung 26 ein Ambientelicht bereitgestellt werden, wobei durch den ausgewählten Ambientemodus eine Einstellung einer Ambientelichtfarbe und/oder einer Ambientelichtquelle und/oder einer Ambientelichtintensität und/oder eines Ambientelichtrhythmus vorgegeben sein kann. Als Komfortfunktion kann das frei programmierbare Kombiinstrument 28 eine eine Information repräsentierende Anzeige bereitstellen, deren Layout in Abhängigkeit von dem ausgewählten Ambientemodus eingestellt sein kann. Die Mensch-Maschine-Schnittstelle 30 kann als Komfortfunktion eine eine Information repräsentierende Anzeige bereitstellen, wobei ein Layout der Anzeige der Mensch-Maschine-Schnittstelle 30 in Abhängigkeit von dem ausgewählten Ambientemodus vorgegeben sein kann. Durch den jeweiligen ausgewählten Ambientemodus kann alternativ oder zusätzlich eine jeweilige Einstellung von einem Layout eines Head-up-Displays, ein Klangprofil, eine Klangbalance, eine Lautstärke, eine Audiowiedergabeliste, ein Systemklang, ein Transmissionsklang, Road-Noise-Cancellations, eine Klimatisierung, eine Lüftungsrichtung, eine Sitzlehnenneigung, eine Sitzheizung, eine Sitzlüftung, eine Massageempfehlung, eine Audiowiedergabe eines Fahrzeugsitzes, ein Raumduft und/oder ein Sauerstoffgehalt vorgegeben sein.

Insbesondere können für ein Auswählen ein beruhigender Ambientemodus und/oder ein aktivierender Ambientemodus und/oder ein aufmunternder Ambientemodus und/oder ein fokussierender Ambientemodus zur Auswahl gestellt sein. Der beruhigende Ambientemodus kann insbesondere für lange Fahrten vorgesehen sein oder ein Durchatmen auf einem Weg von der Arbeit nach Hause ermöglichen. Der aktivierende Ambientemodus kann insbesondere für Kurzstrecken wie Fahrten zur Arbeit oder zum Sport vorgesehen sein. Der aufmunternde Ambientemodus kann insbesondere für Familienausflüge und Fahrten mit Freunden zu Veranstaltungen vorgesehen sein. Der fokussierende Ambientemodus kann insbesondere für Nachtfahrten beziehungsweise für Fahrten mit erhöhtem Konzentrationsbedarf vorgesehen sein.

Komfortfunktionen beziehungsweise Nichtfahrfunktionen können in ihren Einstellungen einem Charakter zugeordnet sein und in den vorgegebenen, jeweils einen Charakter repräsentierenden Ambientemodi zu jeweiligen Makrobefehlen gebündelt werden. Hierdurch kann ein einzelnes individuelles Einstellen jeweiliger Komfortfunktionen beziehungsweise Nichtfahrfunktionen unterbleiben. Das Verfahren ermöglicht, dass in dem Kraftwagen 10 der Ambientemodus und der Fahrmodus unabhängig voneinander eingestellt werden können.

### Bezugszeichenliste

- 10: Kraftwagen
- 12: Fahrzeugkomponente
- 14: Bedienvorrichtung
- 16: Fahrzeuginnenraum
- 18: Ringelement
- 20: Bildschirmeinrichtung
- 22: Basiselement
- 24: Steuereinrichtung
- 26: Beleuchtungseinrichtung
- 28: frei programmierbares Kombiinstrument
- 30: Mensch-Maschine-Schnittstelle
- V1 bis V3: jeweilige Verfahrensschritte

## Patentansprüche

1. Verfahren zum Betreiben eines Kraftfahrzeugs (10), bei welchem mittels einer Bedienvorrichtung (14) eine Benutzereingabe empfangen wird (V1), welche eine Auswahl eines einzustellenden Ambientemodus aus mehreren vorgegebenen Ambientemodi charakterisiert, und bei welchem mittels einer Steuereinrichtung (24) ein Einstellen eines durch den ausgewählten Ambientemodus repräsentierten Satz an Einstellungen in durch den ausgewählten Ambientemodus vorgegebenen, einzustellenden, jeweils eine Komfortfunktion bereitstellenden Fahrzeugkomponenten (12) des Kraftfahrzeugs (10) ausgelöst wird (V2), **dadurch gekennzeichnet, dass** mittels der Steuereinrichtung (24) in Abhängigkeit von dem ausgewählten Ambientemodus ein Fahrmodus aus mehreren vorgegebenen Fahrmodi ausgewählt und eingestellt wird, welcher einen Satz an Einstellungen für jeweilige eine Fahrfunktion bereitstellende Fahrzeugkomponenten vorgibt.

2. Verfahren nach Anspruch 1, wobei mittels der Steuereinrichtung (24) der ausgewählte Ambientemodus unabhängig von einem bereits eingestellten Fahrmodus eingestellt wird.

3. Verfahren nach Anspruch 1 oder 2, wobei die Benutzereingabe mittels einer als Drehsteller ausgebildeten Bedienvorrichtung (14) empfangen wird, mit einer Bildschirmeinrichtung (20), einem die Bildschirmeinrichtung (20) ringförmig umschließenden Ringelement (18) und einem Basiselement (22), relativ zu welchem das Ringelement (18) um eine Drehachse drehbar ist.

4. Verfahren nach einem der vorhergehenden Ansprüche, wobei mittels der Steuereinrichtung (24) ein Anzeigen des eingestellten Ambientemodus durch eine Ausgabeeinrichtung ausgelöst wird.

5. Verfahren nach einem der vorhergehenden Ansprüche, wobei in Abhängigkeit von wenigstens einer weiteren Benutzereingabe wenigstens eine Einstellung wenigstens einer durch den ausgewählten Ambientemodus charakterisierten Fahrzeugkomponenten (12) angepasst wird.

6. Verfahren nach einem der vorhergehenden Ansprüche, wobei für das Auswählen ein beruhigender Ambientemodus und/oder ein aktivierender Ambientemodus und/oder ein aufmunternder Ambientemodus und/oder ein fokussierender Ambientemodus als vorgegebene Ambientemodi bereitgestellt sind.

7. Verfahren nach einem der vorhergehenden Ansprüche, wobei durch den ausgewählten Ambientemodus eine jeweilige Einstellung mehrerer Komfortfunktionen des Kraftfahrzeugs (10) aus
- Ambientelichtfarbe
- Ambientelichtquelle
- Ambientelichtintensität
- Ambientelichtrhythmus
- Layout eines frei programmierbaren Kombi-Instruments (28) oder eines Head-Up-Displays
- Layout einer Anzeige einer Mensch-Maschine-Schnittstelle (30)
- Klangprofil
- Klangbalance
- Lautstärke
- Audiowiedergabeliste
- Systemklang
- Transmissionsklang
- Road Noise Cancellations
- Klimatisierung
- Lüftungsrichtung
- Sitzlehnenneigung
- Sitzheizung
- Sitzlüftung
- Massage Empfehlung
- Audiowiedergabe eines Fahrzeugsitzes
- Raumduft
- Sauerstoffgehalt vorgegeben ist.

8. Verfahren nach Anspruch 1 oder nach einem der vorhergehenden Ansprüche in Rückbezug auf Anspruch 2, wobei durch den ausgewählten Fahrmodus eine jeweilige Einstellung mehrerer Fahrfunktionen des Kraftfahrzeugs (10) aus
- Adaptive Fahrwerksregelung
- Lenkverhalten
- Motor
- Adaptive Geschwindigkeitsregelung
- Dynamisches Kurvenlicht vorgegeben ist.

9. Kraftfahrzeug (10), mit einer Bedienvorrichtung (14), welche dazu eingerichtet ist, eine Benutzereingabe zu empfangen, welche eine Auswahl eines einzustellenden Ambientemodus aus mehreren vorgegebenen Ambientemodi charakterisiert, mit einer Steuereinrichtung (24), welche dazu eingerichtet ist, ein Einstellen eines durch den ausgewählten Ambientemodus repräsentierten Satz an Einstellungen in durch den ausgewählten Ambientemodus vorgegebenen, einzustellenden, jeweils eine Komfortfunktion bereitstellenden Fahrzeugkomponenten (12) des Kraftfahrzeugs (10) auszulösen, und mit mehreren von der Steuereinrichtung (24) einstellbaren Fahrzeugkomponenten (12), wobei das Kraftfahrzeug (10) dazu eingerichtet ist, in einem Verfahren nach einem der vorhergehenden Ansprüche betrieben zu werden.

## Claims

1. Method for operating a motor vehicle (10), in which method a user input is received (V1) by means of an operator control apparatus (14), which user input characterizes a selection of an ambience mode to be set from a plurality of predetermined ambience modes, and in which method setting of a group of settings represented by the selected ambience mode is triggered (V2), by means of a control device (24), in vehicle components (12) of the motor vehicle (10) that are specified by the selected ambience mode, are to be set, and each provide a comfort function, **characterized in that,** on the basis of the selected ambience mode and by means of the control device (24), a driving mode is selected from a plurality of predetermined driving modes and set, which driving mode specifies a group of settings for relevant vehicle components that provide a driving function.

2. Method according to claim 1, wherein the selected ambience mode is set by means of the control device (24) independently of an already set driving mode.

3. Method according to claim 1 or 2, wherein the user input is received by means of an operator control apparatus (14) in the form of a rotary actuator, having a screen device (20), a ring element (18) annularly surrounding the screen device (20), and a base element (22) relative to which the ring element (18) is rotatable about an axis of rotation.

4. Method according to any of the preceding claims, wherein displaying the set ambience mode via an output device is triggered by means of the control device (24).

5. Method according to any of the preceding claims, wherein at least one setting for at least one vehicle component (12) **characterized by** the selected ambience mode is adjusted on the basis of at least one further user input.

6. Method according to any of the preceding claims, wherein a relaxing ambience mode and/or an energizing ambience mode and/or a cheerful ambience mode and/or a focusing ambience mode are provided for the selection as predetermined ambience modes.

7. Method according to any of the preceding claims, wherein the selected ambience mode specifies respective settings for a plurality of comfort functions of the motor vehicle (10) from
- ambience light color
- ambience light source
- ambience light intensity
- ambience light rhythm
- layout of a freely programmable instrument cluster (28) or a head-up display
- layout of a display of a human-machine interface (30)
- sound profile
- sound balance
- volume
- audio playlist
- system sound
- transmission sound
- road noise cancellations
- climate control
- ventilation direction
- seat backrest angle
- seat heating
- seat ventilation
- massage recommendation
- audio playback from a vehicle seat
- aroma
- oxygen content.

8. Method according to claim 1 or according to any of the preceding claims when dependent on claim 2, wherein the selected driving mode specifies respective settings for a plurality of driving functions of the motor vehicle (10) from
- adaptive chassis control
- steering behavior
- engine
- adaptive cruise control
- dynamic cornering light.

9. Motor vehicle (10), having an operator control apparatus (14) configured to receive a user input which characterizes a selection of an ambience mode to be set from a plurality of predetermined ambience modes, having a control device (24) configured to trigger, in vehicle components (12) of the motor vehicle (10) that are specified by the selected ambience mode, are to be set and each provide a comfort function, setting of a group of settings represented by the selected ambience mode, and having a plurality of vehicle components (12) which can be set by the control device (24), wherein the motor vehicle (10) is configured to be operated in a method according to any of the preceding claims.

## Revendications

1. Procédé permettant de faire fonctionner un véhicule automobile (10), dans lequel une entrée utilisateur est reçue (V1) au moyen d'un dispositif de manipulation (14), laquelle caractérise une sélection d'un mode d'ambiance à régler parmi plusieurs modes d'ambiance prédéfinis, et dans lequel, au moyen d'un appareil de commande (24), un réglage d'un ensemble de réglages représentés par le mode d'ambiance sélectionné est déclenché (V2) dans des composants de véhicule (12) à régler du véhicule automobile (10), prédéfinis par le mode d'ambiance sélectionné, et fournissant respectivement une fonction de confort, **caractérisé en ce que,** au moyen de l'appareil de commande (24), en fonction du mode d'ambiance sélectionné, un mode de conduite est sélectionné et réglé parmi plusieurs modes de conduite prédéfinis, lequel prédéfinit un ensemble de réglages pour des composants de véhicule fournissant respectivement une fonction de conduite.

2. Procédé selon la revendication 1, dans lequel le mode d'ambiance sélectionné est réglé au moyen de l'appareil de commande (24) indépendamment d'un mode de conduite déjà réglé.

3. Procédé selon la revendication 1 ou 2, dans lequel l'entrée utilisateur est reçue au moyen d'un dispositif de manipulation (14) réalisé sous forme d'actionneur rotatif, comportant un appareil formant écran (20), un élément annulaire (18) entourant de manière annulaire l'appareil formant écran (20) et un élément de base (22), par rapport auquel l'élément annulaire (18) peut tourner autour d'un axe de rotation.

4. Procédé selon l'une des revendications précédentes, dans lequel un affichage du mode d'ambiance réglé est déclenché par un appareil de sortie au moyen de l'appareil de commande (24).

5. Procédé selon l'une des revendications précédentes, dans lequel, en fonction d'au moins une autre entrée utilisateur, au moins un réglage d'au moins un composant de véhicule (12) **caractérisé par** le mode d'ambiance sélectionné est adapté.

6. Procédé selon l'une des revendications précédentes, dans lequel, pour la sélection, un mode d'ambiance apaisant et/ou un mode d'ambiance stimulant et/ou un mode d'ambiance encourageant et/ou un mode d'ambiance de concentration sont fournis en tant que modes d'ambiance prédéfinis.

7. Procédé selon l'une des revendications précédentes, dans lequel le mode d'ambiance sélectionné prédéfinit un réglage respectif de plusieurs fonctions de confort du véhicule automobile (10) parmi
- la couleur d'éclairage d'ambiance,
- la source de lumière d'ambiance,
- l'intensité de lumière d'ambiance,
- le rythme de lumière d'ambiance,
- la disposition d'un combiné d'instruments librement programmable (28) ou d'un affichage tête haute,
- la disposition d'un affichage d'une interface homme-machine (30),
- le profil sonore,
- le correcteur acoustique,
- le volume sonore,
- la liste de lecture audio,
- le système sonore,
- la transmission sonore,
- la suppression des bruits de la route,
- la climatisation,
- le sens de ventilation,
- l'inclinaison de dossier de siège,
- le chauffage de siège,
- l'aération de siège,
- la recommandation de massage,
- la lecture audio d'un siège de véhicule,
- le parfum d'intérieur,
- la teneur en oxygène.

8. Procédé selon la revendication 1 ou selon l'une des revendications précédentes en référence à la revendication 2, dans lequel le mode de conduite sélectionné prédéfinit un réglage respectif de plusieurs fonctions de conduite du véhicule automobile (10) parmi
- la régulation adaptative du châssis,
- le comportement de la direction,
- le moteur,
- le régulateur de vitesse adaptatif,
- l'éclairage dynamique en virage.

9. Véhicule automobile (10), comportant un dispositif de manipulation (14) configuré pour recevoir une entrée utilisateur qui caractérise une sélection d'un mode d'ambiance à régler parmi plusieurs modes d'ambiance prédéfinis, comportant un appareil de commande (24) configuré pour déclencher le réglage d'un ensemble de réglages représentés par le mode d'ambiance sélectionné dans des composants de véhicule (12) à régler du véhicule automobile (10), prédéfinis par le mode d'ambiance sélectionné, et fournissant respectivement une fonction de confort, et comportant plusieurs composants de véhicule (12) réglables par l'appareil de commande (24), dans lequel le véhicule automobile (10) est configuré pour fonctionner dans un procédé selon l'une des revendications précédentes.
